# EUROPEAN PATENT APPLICATION

(11) **EP 4 637 092 A1**
(43) Date of publication of application: **22.10.2025**
(21) Application number: 23914022.1
(22) Date of filing: 05.01.2023
(51) Int. Cl.: H04L 27/00

(54) **DATA PROCESSING METHOD AND COMMUNICATION APPARATUS**

(71) Applicant: Huawei Technologies Co., Ltd., Shenzhen, Guangdong 518129 (CN)
(72) Inventor: YANG, Wenjun, Shenzhen, Guangdong 518129 (CN); HU, Xiaoqun, Shenzhen, Guangdong 518129 (CN)
(74) Representative: Goddar, Heinz J.
(86) International application number: PCT/CN2023/070640
(87) International publication number: WO 2024/145864

(57) **Abstract**

This application provides a data processing method and a communication apparatus. The method is performed by a radio frequency unit side of a network device. The method includes: determining a first resource feature of first service data; and sending the first service data to a first processing module based on the first resource feature, where the first processing module is any one of at least one processing module, and the at least one processing module is used in a distributed unit side of the network device. In this way, a radio frequency unit of the network device performs resource feature identification of service data, and forwards corresponding service data to a processing module in a distributed unit, so that overall latency of data processing can be reduced.

## Description

### TECHNICAL FIELD

This application relates to the field of communication technologies, and more specifically, to a data processing method and a communication apparatus.

### BACKGROUND

In the communication field, a terminal device sends air interface data to a network device, and the network device performs data processing on the air interface data from the terminal device. Specifically, a distributed unit (distributed unit, DU) in the network device performs channel parsing and service identification on the air interface data, and then forwards corresponding service data in the air interface data to each processing module in the DU, and the processing module further processes the service data.

However, the foregoing data processing manner is easy to cause high latency. For a low-latency service, the latency caused by the foregoing data processing manner greatly affects a low-latency requirement of the low-latency service. Therefore, a method that can reduce overall latency of data processing is urgently needed.

### SUMMARY

This application provides a data processing method and a communication apparatus, to reduce overall latency of data processing.

According to a first aspect, a data processing method is provided. The method is applied to a module on a radio frequency unit side of a network device, for example, a radio frequency unit, or a software module, a hardware circuit, or a combination of the software module and the hardware circuit that can implement the method. The method includes: determining a first resource feature of first service data; and sending the first service data to a first processing module based on the first resource feature, where the first processing module is one of at least one processing module, and the at least one processing module is used in a distributed unit side of the network device.

Specifically, the radio frequency unit may be a radio unit (radio unit, RU), or may be a module having a radio frequency function, for example, a remote radio processing unit (remote radio unit, RRU) or an active antenna processing unit (active antenna unit, AAU). Therefore, the radio frequency unit is a superordinate concept of the RU or the RRU. In addition, a distributed unit may be a distributed unit (distributed unit, DU), or may be another unit or module that can perform a similar or same function. This is not limited in this application. Therefore, the distributed unit is a superordinate concept of the DU.

In comparison with a manner in which the radio frequency unit sends service data to the distributed unit, and the distributed unit performs resource feature identification on the service data and forwards the service data to a corresponding processing module, in a manner in which the radio frequency unit performs resource feature identification on service data and sends corresponding service data to a processing module in the distributed unit, overall latency of data processing can be reduced.

In addition, the radio frequency unit can send the corresponding service data to the processing module in the distributed unit, and the distributed unit no longer need a module or an integrated circuit configured to perform a service data distribution function. In this way, overall costs of the network device can be reduced.

Based on the foregoing technical solution, this application may further support reducing complexity of data interaction between the radio frequency unit and the distributed unit of the network device.

In a possible implementation, the method further includes: receiving first indication information, where the first indication information indicates at least one mapping relationship, each mapping relationship is used to associate one resource feature with one processing module; and determining the first processing module based on a first mapping relationship and the first resource feature, where the at least one mapping relationship includes the first mapping relationship, and the first mapping relationship associates the first resource feature with the first processing module.

In this way, the radio frequency unit may obtain a mapping relationship between a processing module of a distributed unit and a resource feature of service data by interacting with the distributed unit, so that the radio frequency unit determines the resource feature of the service data, and then determines, based on the foregoing mapping relationship, a processing module associated with each piece of service data.

In a possible implementation, the first indication information includes an identifier of the at least one processing module and a resource feature associated with a processing module corresponding to each identifier.

Specifically, a distributed unit may send, to the radio frequency unit, an identifier of a processing module in the distributed unit and a resource feature associated with each processing module, so that the radio frequency unit can determine a corresponding processing module based on a resource feature of service data.

In a possible implementation, the first resource feature includes at least one of the following: time domain information, frequency domain information, or space domain information.

In a possible implementation, the method further includes: receiving second indication information, where the second indication information indicates a status of the first processing module; and sending the first service data to the first processing module, includes: sending the first service data to the first processing module when determining, based on the second indication information, that the first processing module is in an operating state.

Specifically, the radio frequency unit sends the first service data to the first processing module only when the radio frequency unit determines, based on the second indication information, that the first processing module is in the operating state. This can improve efficiency of data interaction between the radio frequency unit and a processing module in a distributed unit.

According to a second aspect, a data processing method is provided. The method is applied to a module on a distributed unit side of a network device, for example, a distributed unit, or a software module, a hardware circuit, or a combination of the software module and the hardware circuit that can implement the method. The method includes: sending first indication information, where the first indication information indicates at least one mapping relationship, each mapping relationship associates one resource feature with one processing module, and the processing module is used in the distributed unit side of the network device.

In a possible implementation, the first indication information includes an identifier of at least one processing module and a resource feature associated with a processing module corresponding to each identifier.

In a possible implementation, the resource feature includes at least one of the following: time domain information, frequency domain information, or space domain information.

In a possible implementation, the method further includes: sending second indication information, where the second indication information indicates a status of a part or all of the at least one processing module.

According to a third aspect, a communication apparatus is provided, and is configured to perform the method in the first aspect. In a design, the apparatus may include a module/unit that is in one-to-one correspondence with the method/operation/step/action described in the first aspect. The module/unit may be implemented by a hardware circuit, software, or a combination of the hardware circuit and the software. In another design, the apparatus includes: a radio frequency unit, configured to determine a first resource feature of first service data. The radio frequency unit is further configured to send the first service data to a first processing module based on the first resource feature. The first processing module is any one of at least one processing module, and the at least one processing module is used in a distributed unit side of a network device.

In a possible implementation, the radio frequency unit is further configured to receive first indication information, where the first indication information indicates at least one mapping relationship, and each mapping relationship associates one resource feature with one processing module. The radio frequency unit is further configured to determine the first processing module based on a first mapping relationship and the first resource feature. The at least one mapping relationship includes the first mapping relationship, and the first mapping relationship associates the first resource feature with the first processing module.

In a possible implementation, the first indication information includes an identifier of the at least one processing module and a resource feature associated with a processing module corresponding to each identifier.

In a possible implementation, the first resource feature includes at least one of the following: time domain information, frequency domain information, or space domain information.

In a possible implementation, the radio frequency unit is further configured to receive second indication information, where the second indication information indicates a status of the first processing module. The radio frequency unit is further configured to send the first service data to the first processing module when determining, based on the second indication information, that the first processing module is in an operating state.

According to a fourth aspect, a communication apparatus is provided, and is configured to perform the method in the second aspect. In a design, the apparatus may include a module/unit that is in one-to-one correspondence with the method/operation/step/action described in the second aspect. The module/unit may be implemented by a hardware circuit, software, or a combination of the hardware circuit and the software. In another design, the apparatus includes a distributed unit, configured to send first indication information, where the first indication information indicates at least one mapping relationship, and each mapping relationship associates one resource feature with one processing module.

In a possible implementation, the first indication information includes an identifier of at least one processing module and a resource feature associated with a processing module corresponding to each identifier.

In a possible implementation, the resource feature includes at least one of the following: time domain information, frequency domain information, or space domain information.

In a possible implementation, the distributed unit is further configured to send second indication information, where the second indication information indicates a status of a part or all of the at least one processing module.

According to a fifth aspect, a communication apparatus is provided, and includes a processor. The processor is configured to enable, by executing a computer program or instructions or by using a logic circuit, the communication apparatus to perform the method according to any one of the first aspect and the possible implementations of the first aspect, or the communication apparatus to perform the method according to any one of the second aspect and the possible implementations of the second aspect.

In a possible implementation, the apparatus further includes a memory, and the memory is configured to store the computer program or the instructions.

Optionally, the processor and the memory are integrated together, or the processor and the memory are separately disposed.

In another possible implementation, the memory is located outside the communication apparatus.

In a possible implementation, the communication apparatus further includes a communication interface that is configured to input and/or output a signal.

For example, the communication interface may be a transceiver, a circuit, a bus, a module, or another type of communication interface.

According to a sixth aspect, a communication apparatus is provided, and includes a logic circuit and an input/output interface. The input/output interface is configured to output and/or input a signal. The logic circuit is configured to perform the method according to any one of the first aspect and the possible implementations of the first aspect, or the logic circuit is configured to perform the method according to any one of the second aspect and the possible implementations of the second aspect.

According to a seventh aspect, a computer-readable storage medium is provided, and includes a computer program or instructions. When the computer program or the instructions are run on a computer, the computer is enabled to perform the method according to any one of the first aspect and the possible implementations of the first aspect, or the computer is enabled to perform the method according to any one of the second aspect and the possible implementations of the second aspect.

According to an eighth aspect, a computer program product is provided, and includes instructions. When the instructions are run on a computer, the computer is enabled to perform the method according to any one of the first aspect and the possible implementations of the first aspect, or the computer is enabled to perform the method according to any one of the second aspect and the possible implementations of the second aspect.

According to a ninth aspect, a communication system is provided. The communication system includes a radio frequency unit and a distributed unit. The radio frequency unit is configured to perform the method according to any one of the first aspect and the possible implementations of the first aspect. The distributed unit is configured to perform the method according to any one of the second aspect and the possible implementations of the second aspect.

For descriptions of beneficial effects of the second aspect to the ninth aspect, refer to descriptions of beneficial effects of the first aspect. Details are not described herein again.

### BRIEF DESCRIPTION OF DRAWINGS

FIG. 1 is a diagram of a communication system 100 to which an embodiment of this application is applicable;
FIG. 2 is a diagram of an application scenario 200 according to an embodiment of this application;
FIG. 3 is a schematic interaction flowchart of a data processing method 300 according to an embodiment of this application;
FIG. 4 is a schematic interaction flowchart of a data processing method 400 according to an embodiment of this application;
FIG. 5 is a block diagram of a structure of a communication apparatus 500 according to an embodiment of this application;
FIG. 6 is a block diagram of a structure of a communication apparatus 600 according to an embodiment of this application;
FIG. 7 is a block diagram of a structure of a communication apparatus 700 according to an embodiment of this application; and
FIG. 8 is a block diagram of a structure of a communication apparatus 800 according to an embodiment of this application.

### DESCRIPTION OF EMBODIMENTS

The following describes technical solutions of this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system, a new radio (new radio, NR) system, a system such as a 6th generation (6th generation, 6G) system evolved after 5G, and a non-terrestrial network (non-terrestrial network, NTN) system such as an inter-satellite communication system or a satellite communication system. The satellite communication system includes a satellite base station and a terminal device. The satellite base station provides a communication service for the terminal device. The satellite base station may alternatively communicate with a terrestrial base station. A satellite may be used as a base station, or may be used as a terminal device. The satellite may be a non-terrestrial base station, a non-terrestrial device, or the like, for example, an uncrewed aerial vehicle, a hot air balloon, a low earth orbit satellite, a medium earth orbit satellite, or a high earth orbit satellite.

The technical solutions in embodiments of this application are applicable to both a homogeneous network scenario and a heterogeneous network scenario. In addition, a transmission point is not limited. For example, coordinated multipoint transmission may be performed between macro base stations, between micro base stations, or between a macro base station and a micro base station. The technical solutions in embodiments of this application are applicable to the FDD/TDD system. The technical solutions in embodiments of this application are not only applicable to a low-frequency scenario (sub 6G), but also applicable to a high-frequency scenario (above 6 GHz), terahertz, optical communication, and the like. The technical solutions in embodiments of this application are not only applicable to communication between a network device and a terminal, but also applicable to communication between network devices, communication between terminals, communication in an internet of vehicles, communication in an internet of things, communication in an industrial internet, and the like.

The technical solutions in embodiments of this application may alternatively be applied to a scenario in which a terminal is connected to a single base station. The base station connected to the terminal and a core network (core network, CN) connected to the base station are of a same standard. For example, if the CN is a 5G core, the base station is correspondingly a 5G base station, and the 5G base station is directly connected to the 5G core. Alternatively, if the CN is a 6G core, the base station is a 6G base station, and the 6G base station is directly connected to the 6G core. The technical solutions in embodiments of this application are alternatively applicable to a dual connectivity (dual connectivity, DC) scenario in which a terminal is connected to at least two base stations.

The technical solutions in embodiments of this application are alternatively applicable to a macro-micro scenario including different forms of base stations in a communication network. For example, the base station may be a satellite, an air balloon station, an uncrewed aerial vehicle station, or the like. The technical solutions in embodiments of this application are alternatively applicable to a scenario in which both a wide-coverage base station and a small-coverage base station exist.

The technical solutions in embodiments of this application may be applied to a scenario in which a service has a requirement for high reliability, for example, a port, industrial manufacturing, transportation, and a coal mine scenario.

It may be further understood that the technical solutions in embodiments of this application may be further applied to a 5.5G wireless communication system, a 6G wireless communication system, and a wireless communication system after 5.5G and 6G. Application scenarios include but are not limited to a terrestrial cellular communication scenario, an NTN scenario, a satellite communication scenario, a high altitude platform station (high altitude platform station, HAPS) communication scenario, a vehicle-to-everything (vehicle-to-everything, V2X) scenario, an integrated access and backhaul (integrated access and backhaul, IAB) scenario, a reconfigurable intelligent surface (reconfigurable intelligent surface, RIS) communication scenario, and the like.

The terminal in embodiments of this application may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a computing device or another processing device connected to a wireless modem, a vehicle-mounted device, a communication device carried on a high altitude aircraft, a wearable device, an uncrewed aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in an evolved communication network after 5G, or the like. This is not limited in embodiments of this application.

In embodiments of this application, a communication apparatus configured to implement a function of the terminal device may be the terminal device, or may be an apparatus that can support the terminal device in implementing the function, for example, a chip system. The apparatus may be mounted in the terminal device or used in cooperation with the terminal device. In embodiments of this application, the chip system may include a chip, or may include a chip and another discrete component.

In embodiments of this application, the network device is a device having a wireless transceiver function, and is configured to communicate with the terminal device. An access network device may be a node in a radio access network (radio access network, RAN), or may be referred to as a base station, or may be referred to as a RAN node. The access network device may be an evolved NodeB (evolved NodeB, eNB or eNodeB) in LTE, a base station in a 5G network, for example, a gNodeB (gNB), a base station in an evolved public land mobile network (public land mobile network, PLMN) after 5G, a broadband network gateway (broadband network gateway, BNG), an aggregation switch, a 3rd generation partnership project (3rd generation partnership project, 3GPP) access device, or the like. For example, the RAN may be configured as a RAN defined in a 3GPP protocol, an open radio access network (open radio access network, O-RAN), a cloud access network (cloud radio access network, C-RAN), or the like.

The network device in embodiments of this application may further include various forms of base stations, for example, a macro base station, a micro base station (also referred to as a small cell), a relay station, a transmission reception point (transmission reception point, TRP), a transmission point (transmission point, TP), a mobile switching center, a device that performs a base station function in device-to-device (device-to-device, D2D), vehicle-to-everything (vehicle-everything, V2X), and machine-to-machine (machine, M2M) communication, a network device in an NTN communication system, and the like. This is not specifically limited in embodiments of this application.

The network device in embodiments of this application may further include a network element or a module that implements a part of functions of the base station, for example, include one or more of the following: a central unit (central unit, CU), a distributed unit (distributed unit, DU), or a radio unit (radio unit, RU). Optionally, the CU may be further separated into a CU-control plane (control plane, CP) and a CU-user plane (user plane, UP). Functions of the CU and the DU may be implemented by different network elements, or may be both implemented by a baseband unit (baseband unit, BBU) of the base station. A function of the RU may be implemented by a radio frequency device of the base station. For example, the radio frequency device of the base station may be a remote radio processing unit (remote radio unit, RRU), a remote radio head (remote radio head, RRH), a pico remote radio unit (pico remote radio unit, pRRU), an active antenna processing unit (active antenna unit, AAU), or another unit, module, or device having a radio frequency processing function. A communication interface protocol between the BBU and the radio frequency device may be a common public radio interface (common public radio interface, CPRI) interface protocol, an enhanced common public radio interface (enhanced common public radio interface, eCPRI) interface protocol, a fronthaul interface protocol between a DU and an RU in an O-RAN system, or the like. This is not limited. Optionally, the fronthaul interface protocol between the DU and the RU in the O-RAN system may be further considered as a special example of the eCPRI interface protocol.

In embodiments of this application, an apparatus configured to implement a function of the network device may be the network device, or may be an apparatus that can support the network device in implementing the function, for example, a chip system. The apparatus may be mounted in the network device or used in cooperation with the network device. In embodiments of this application, the chip system may include a chip, or may include a chip and another discrete component.

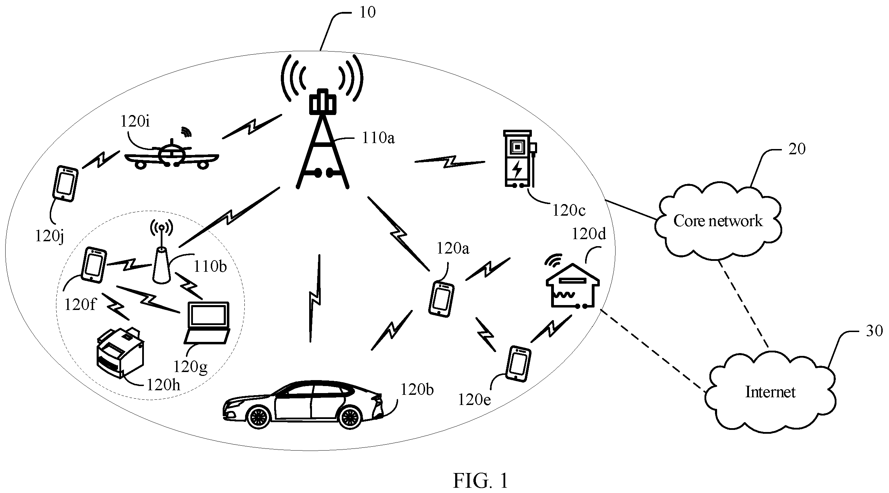

FIG. 1 is a diagram of a communication system 100 to which an embodiment of this application is applicable. As shown in FIG. 1, the communication system 100 includes a radio access network (radio access network, RAN) 10 and a core network (core network, CN) 20. The RAN 10 includes at least one RAN node (for example, 110a and 110b in FIG. 1, which are collectively referred to as 110) and at least one terminal (for example, 120a to 120j in FIG. 1, which are collectively referred to as 120). The RAN 10 may further include another RAN node, for example, a wireless relay device and/or a wireless backhaul device (not shown in FIG. 1). The terminal 120 is connected to the RAN node 110 in a wireless manner. The RAN node 110 is connected to the core network 20 in a wireless or wired manner. A core network device in the core network 20 and the RAN node 110 in the RAN 10 may be different physical devices, or may be a same physical device that integrates a logical function of the core network and a logical function of the radio access network.

The RAN 10 may be a 3GPP-related cellular system, for example, a 4G or 5G mobile communication system, or a future-oriented evolved system (for example, a 6G mobile communication system). Alternatively, the RAN 10 may be an O-RAN or a CRAN. Alternatively, the RAN 10 may be a communication system that integrates the foregoing two or more systems.

The RAN node 110 may also be sometimes referred to as an access network device, a RAN entity, an access node, or the like, and forms a part of a communication system, to help a terminal implement radio access. A plurality of RAN nodes 110 in the communication system 100 may be nodes of a same type, or may be nodes of different types. In some scenarios, roles of the RAN node 110 and the terminal 120 are relative. For example, a network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. Both the RAN node 110 and the terminal 120 are sometimes referred to as communication apparatuses. For example, network elements 110a and 110b in FIG. 1 may be understood as communication apparatuses having a base station function, and network elements 120a to 120j may be understood as communication apparatuses having a terminal function.

In a possible scenario, the RAN node 110 may be a base station, an evolved base station, a TRP, a next generation base station, a next generation base station in a 6G mobile communication system, a base station in a future mobile communication system, or the like. The RAN node 110 may be a macro base station (for example, 110a), a micro base station or an indoor station (for example, 110b), a relay node or a donor node, or a radio controller in a CRAN scenario. Optionally, the RAN node 110 may alternatively be a server, a wearable device, a vehicle, a vehicle-mounted device, or the like. For example, an access network device in a V2X technology may be a roadside unit (roadside unit, RSU).

In another possible scenario, a plurality of RAN nodes 110 coordinate to assist the terminal in implementing radio access, and different RAN nodes 110 separately implement a part of functions of the base station. For example, the RAN node 110 may be a CU, a DU, a CU-CP, a CU-UP, or a radio unit (radio unit, RU). The CU and the DU may be separately disposed, or may be included in a same network element, for example, a BBU. The RU may be included in a radio frequency device or a radio frequency unit, for example, included in an RRU, an AAU, or a remote radio head (remote radio head, RRH).

In different systems, the CU (or the CU-CP and the CU-UP), the DU, or the RU may alternatively have a different name, but a person skilled in the art may understand a meaning of the name. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as an example for description in this application. Any one of the CU (or the CU-CP or the CU-UP), the DU, and the RU in this application may be implemented by using a software module, a hardware module, or a combination of the software module and the hardware module.

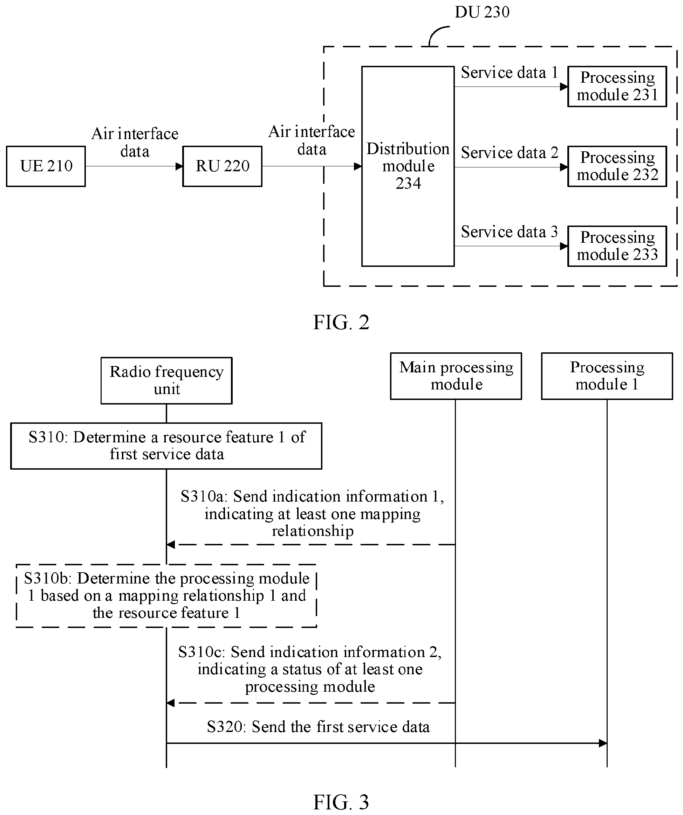

FIG. 2 is a diagram of an application scenario 200 according to an embodiment of this application. As shown in FIG. 2, the application scenario 200 includes UE 210, an RU 220, and a DU 230. The DU 230 includes at least one distribution module and at least one processing module. An example in which the DU 230 includes three processing modules and one distribution module is used for description.

Specifically, the UE 210 sends air interface data to the RU 220, the RU 220 sends the air interface data to a distribution module 234, and the distribution module 234 performs channel parsing and service identification on the air interface data, and obtains service data 1 to service data 3 in the air interface data. Further, the distribution module 234 sends the service data 1 to a processing module 231, and the processing module 231 processes the service data 1. The distribution module 234 sends the service data 2 to a processing module 232, and the processing module 232 processes the service data 2. The distribution module 234 sends the service data 3 to a processing module 233, and the processing module 233 processes the service data 3.

In addition, in this embodiment of this application, there may be an antenna between the UE 210 and the RU 220. For example, that the UE 210 sends data to the RU 220 may be understood as that a source of information is the UE 210, and a destination is the RU 220. The information may undergo necessary processing between the source for sending the information and the destination, for example, a format change. However, the destination may understand valid information from the source. Similar descriptions in this application may be understood similarly, and details are not described herein again.

For uplink data transmission, the RU 220 mainly performs processing such as analog-to-digital conversion, time-frequency domain transformation, or beam domain transformation on the air interface data received by the antenna, and the DU 230 completes resource demapping, channel estimation, channel demodulation, physical channel-related processing, and the like on the air interface data reported by the RU 220. Therefore, the RU 220 mainly performs a function of receiving and forwarding the air interface data, and the DU 230 is mainly responsible for a function of performing data processing on the air interface data uploaded by the RU 220.

It can be learned from FIG. 2 that the air interface data is transmitted in the following path: the UE 210 → the RU 220 → the distribution module 234 → (the processing modules 231 to 233). In the foregoing transmission procedure, overall processing latency of the air interface data is high, and greatly affects a low-latency requirement of a low-latency service. Therefore, overall latency of data processing needs to be urgently reduced.

In view of the foregoing technical problem, this application provides a data processing method and a communication apparatus, to reduce overall latency of data processing.

The following describes the data processing method and the communication apparatus in this application with reference to the accompanying drawings.

FIG. 3 is a schematic interaction flowchart of a data processing method 300 according to an embodiment of this application. A method procedure in FIG. 3 may be performed by a radio frequency unit and a distributed unit of a network device, or may be performed by a module and/or a component (for example, a chip or an integrated circuit) that can be mounted in or connected to the radio frequency unit and the distributed unit and that have/has a corresponding function. This is not limited herein. The following uses the radio frequency unit and the distributed unit as an example for description. As shown in FIG. 3, the method 300 includes the following steps.

S310: The radio frequency unit determines a resource feature 1 of first service data.

Specifically, the radio frequency unit in S310 may be an RU, or may be a module having a radio frequency function, for example, an RRU or an AAU. Therefore, the radio frequency unit is a superordinate concept of the RU or the RRU. In addition, the distributed unit may be a DU, or may be another unit or module that can perform a similar or same function. This is not limited in this application. Therefore, the distributed unit is a superordinate concept of the DU.

In this embodiment of this application, the radio frequency unit has capabilities of performing parsing and transformation in time domain, frequency domain, space domain, or the like. Therefore, the radio frequency unit may perform channel parsing and air interface data splitting on air interface data sent by a terminal device, to obtain each piece of service data in the air interface data. It may be understood that a resource feature corresponding to each piece of service data in the air interface data is different. In an example, a resource feature of the first service data in the air interface data is the resource feature 1, a resource feature of second service data in the air interface data is a resource feature 2, ..., and a resource feature of N^{th} service data in the air interface data is a resource feature N.

In addition, the air interface data splitting may be as follows: The radio frequency unit splits the air interface data into a plurality of parts (where one part is one piece of service data) based on different resource features of the service data.

In a possible implementation, the resource feature includes but is not limited to one or more of the following: latency information, frequency domain information, or space domain information. For example, the first service data is large uplink data, and the resource feature of the first service data is 20 MHz to 100 MHz in frequency domain; the first service data is positioning data, and the resource feature of the first service data is symbol (Symbol) 11 and symbol 12/transmission time interval (transmission time interval, TTI) in time domain; or the first service data is ultra reliable and low latency communication (ultra reliable and low latency communication, URLLC) data, and the resource feature of the first service data is 0 MHz to 20 MHz in frequency domain. In conclusion, the radio frequency unit splits the air interface data based on the resource features of the service data, and obtains the resource feature of each piece of service data and each piece of service data.

Optionally, the resource features listed above may further include a combination of a plurality of parameters such as latency and a frequency domain. This is not limited herein.

Optionally, the resource feature may further include code domain information. For example, the code domain information includes but is not limited to information such as a spreading code, an extension code, and a scrambling code.

S320: The radio frequency unit sends the first service data to a processing module 1 based on the resource feature 1.

Specifically, the radio frequency unit obtains and determines the resource feature of each piece of service data, and further, the radio frequency unit sends corresponding service data to a processing module in the distributed unit. For example, the radio frequency unit sends the first service data to the processing module 1 in the distributed unit based on the resource feature 1. The processing module 1 in the distributed unit may process the first service data.

It may be understood that the processing module 1 is any one of at least one processing module included in the distributed unit.

In comparison with a manner in which the radio frequency unit sends service data to the distributed unit, and the distributed unit performs resource feature identification on the service data and forwards the service data to a corresponding processing module, in a manner in which the radio frequency unit performs resource feature identification on service data and sends corresponding service data to a processing module in the distributed unit, overall latency of data processing can be reduced.

In addition, the radio frequency unit can send the corresponding service data to the processing module in the distributed unit, and the distributed unit no longer need a module or an integrated circuit configured to perform a service data distribution function. In this way, overall costs of the network device can be reduced.

Based on the foregoing technical solution, this application may further support reducing complexity of data interaction between the radio frequency unit and the distributed unit of the network device.

In conclusion, in this application, the radio frequency unit can obtain and determine a resource feature of service data, determine a corresponding processing module in the distributed unit based on the resource feature of the service data, and send the service data to the corresponding processing module. In this way, transmission latency of the air interface data from the terminal device to the processing module in the distributed unit can be reduced, thereby reducing overall latency of data processing.

Optionally, in a possible implementation, the method 300 may further include the following steps.

S310a: The radio frequency unit receives indication information 1 from a main processing module in the distributed unit, where the indication information 1 indicates at least one mapping relationship, and each mapping relationship associates one resource feature with one processing module.

S310b: The radio frequency unit determines the processing module 1 based on a mapping relationship 1 and the resource feature 1.

Specifically, that the radio frequency unit sends the first service data to the processing module 1 based on the resource feature 1 is performed based on the mapping relationship indicated in the indication information 1 sent by the main processing module in the distributed unit to the radio frequency unit. Specifically, the main processing module in the distributed unit indicates an association relationship between the resource feature of each piece of service data and a processing module to the radio frequency unit. The radio frequency unit may determine the corresponding processing module based on the determined resource feature of the service data in combination with the foregoing mapping relationship. Further, the radio frequency unit sends the corresponding service data to the processing module.

In this way, the radio frequency unit may obtain a mapping relationship between a processing module of the distributed unit and a resource feature of service data by interacting with the distributed unit, so that the radio frequency unit determines the resource feature of the service data, and then determines, based on the foregoing mapping relationship, a processing module associated with each piece of the service data.

The at least one mapping relationship in S310a includes the mapping relationship 1, and the mapping relationship 1 associates the resource feature 1 with the processing module 1. Optionally, that the mapping relationship 1 associates the resource feature 1 with the processing module 1 may be as follows: The mapping relationship 1 associates an identifier of the resource feature 1 with an identifier of the processing module 1. In this application, an identifier can be configured for the resource feature of each piece of service data. For example, 20 MHz to 100 MHz in frequency domain corresponds to an identifier 1 (an identifier of a resource feature), 0 MHz to 10 MHz in frequency domain corresponds to an identifier 2 (an identifier of a resource feature), and so on. This is not limited herein.

In a possible implementation, one resource feature may be associated with one or more processing modules. For example, the processing module 1 and a processing module 2 may be configured to process the first service data.

Optionally, one processing module may be associated with one or more resource features. For example, the processing module 1 may be further configured to process the second service data.

It may be understood that S310a and S310b are performed before S320.

In a possible implementation, the indication information 1 in S310a may include identifiers of a plurality of processing modules and a plurality of resource features. Specifically, an example of the indication information 1 is: {processing module identifier 1, resource feature 1}, {processing module identifier 2, resource feature 2}, ..., {processing module identifier N, resource feature N}, and the like. The processing module identifier 1 corresponds to the processing module 1, the processing module identifier 2 corresponds to the processing module 2, ..., and the processing module identifier N corresponds to a processing module N. Specifically, a distributed unit may send, to the radio frequency unit, an identifier of a processing module in the distributed unit and a resource feature associated with each processing module, so that the radio frequency unit can determine a corresponding processing module based on a resource feature of service data.

Optionally, in a possible implementation, an identifier of a processing module may be indicated by using a destination address of the processing module. Correspondingly, the indication information 1 includes destination addresses of the plurality of processing modules and a resource feature associated with a processing module corresponding to each destination address. The destination addresses of the processing modules are provided, so that the radio frequency unit can determine a processing module corresponding to each piece of service data.

Optionally, in a possible implementation, the method 300 may further include the following step.

S310c: The radio frequency unit receives indication information 2 from the main processing module of the distributed unit, where the indication information 2 indicates a status of the at least one processing module.

Specifically, the indication information 2 indicates the status of the at least one processing module, and the status of the processing module includes an operating state and a non-operating state. The operating state indicates that the processing module can process the service data, and the non-operating state indicates that the processing module cannot process the service data. Further, the radio frequency unit determines, based on an indication of the indication information 2, whether to send the first service data to the processing module 1. In this way, the radio frequency unit may send the first service data to the processing module 1 only when the radio frequency unit determines, based on the indication information 2, that the processing module 1 is in the operating state. This can improve efficiency of data interaction between the radio frequency unit and the processing module in the distributed unit.

In an example, when the indication information 2 indicates that the processing module 1 is in the operating state, the radio frequency unit sends the first service data to the processing module 1. In another example, when the indication information 2 indicates that the processing module 1 is in the non-operating state, the radio frequency unit does not send the first service data to the processing module 1.

Optionally, the indication information 2 may be a part of the indication information 1, or the indication information 2 exists independently of the indication information 1. This is not limited herein.

It may be understood that S310c is performed before S320, and an execution sequence of S310c and an execution sequence of S310a and S310b are not limited.

The following further describes the method 300 with reference to another accompanying drawing.

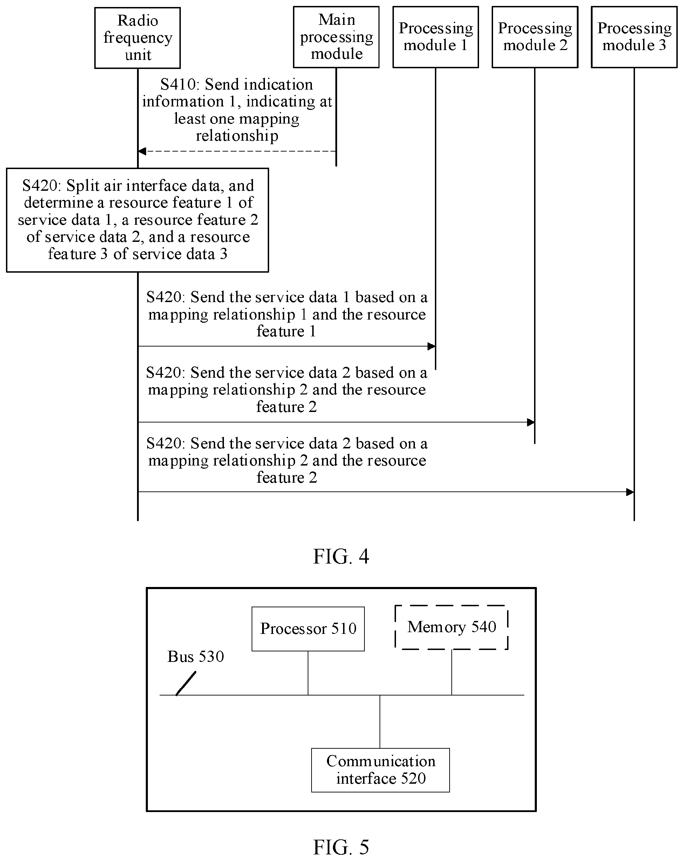

FIG. 4 is a schematic interaction flowchart of a data processing method 400 according to an embodiment of this application. A method procedure in FIG. 4 may be performed by a radio frequency unit and a distributed unit, or may be performed by a module and/or a component (for example, a chip or an integrated circuit) that can be mounted in or connected to the radio frequency unit and the distributed unit and that have/has a corresponding function. This is not limited in this application. The following uses the radio frequency unit and the distributed unit as an example for description. As shown in FIG. 4, the method 400 includes the following steps.

Optionally, S410: The radio frequency unit receives indication information 1 from a main processing module of the distributed unit, where the indication information 1 indicates a mapping relationship 1 to a mapping relationship 3, the mapping relationship 1 associates a resource feature 1 with a processing module 1, the mapping relationship 2 associates a resource feature 2 with a processing module 2, and the mapping relationship 3 associates a resource feature 3 with a processing module 3.

For descriptions of S410, refer to the foregoing descriptions of S310a. Details are not described herein again.

S420: The radio frequency unit splits air interface data, and determines the resource feature 1 of service data 1, the resource feature 2 of service data 2, and the resource feature 3 of service data 3.

For descriptions of splitting the air interface data by the radio frequency unit, refer to the foregoing descriptions. Details are not described herein again.

S430: The radio frequency unit sends the service data 1 to the processing module 1 based on the mapping relationship 1 and the resource feature 1, sends the service data 2 to the processing module 2 based on the mapping relationship 2 and the resource feature 2, and sends the service data 3 to the processing module 3 based on the mapping relationship 3 and the resource feature 3.

Correspondingly, the processing module 1 receives the service data 1 from the radio frequency unit, the processing module 2 receives the service data 2 from the radio frequency unit, and the processing module 3 receives the service data 3 from the radio frequency unit. Further, the processing module 1 processes the service data 1, the processing module 2 processes the service data 2, and the processing module 3 processes the service data 3.

In conclusion, the radio frequency unit can send corresponding service data to each processing module based on an association relationship between a resource feature of service data and a processing module, and then the processing module processes the service data. In this way, overall latency of data processing can be reduced.

It may be further understood that, because the radio frequency unit can perform functions such as channel parsing and service identification, the distributed unit does not need the distribution module shown in FIG. 2. Therefore, overall cost overheads and complexity of a network device can be reduced.

The foregoing describes the method embodiments in embodiments of this application, and the following describes corresponding apparatus embodiments.

To implement functions in the methods provided in embodiments of this application, both the terminal and the network device may include a hardware structure and/or a software module, and implement the functions in a form of the hardware structure, the software module, or a combination of the hardware structure and the software module. Whether a function in the foregoing functions is performed by the hardware structure, the software module, or the combination of the hardware structure and the software module depends on particular applications and design constraints of the technical solutions.

FIG. 5 is a block diagram of a communication apparatus 500 according to an embodiment of this application. The communication apparatus 500 includes a processor 510 and a communication interface 520. The processor 510 and the communication interface 520 may be connected to each other through a bus 530. The communication apparatus 500 shown in FIG. 5 may be a radio frequency unit or a DU.

Optionally, the communication apparatus 500 further includes a memory 540.

The memory 540 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 540 is configured to store related instructions and data.

The processor 510 may be one or more central processing units (central processing units, CPUs). When the processor 510 is one CPU, the CPU may be a single-core CPU, or may be a multi-core CPU.

When the communication apparatus 500 is a radio frequency unit, for example, the processor 510 is configured to perform the following operations: determining a resource feature 1 of first service data; and sending the first service data to a processing module 1 based on the resource feature 1.

The foregoing content is merely used as an example for description. When the communication apparatus 500 is a radio frequency unit, the communication apparatus 500 is responsible for performing methods or steps related to the radio frequency unit in the foregoing method embodiments.

When the communication apparatus 500 is a distributed unit (a processing module 1), for example, the processor 510 is configured to perform the following operation: receiving first service data from a radio frequency unit.

The foregoing content is merely used as an example for description. When the communication apparatus 500 is a distributed unit (a processing module 1), the communication apparatus 500 is responsible for performing methods or steps related to the DU in the foregoing method embodiments.

The foregoing descriptions are merely an example for description. For specific content, refer to the content shown in the foregoing method embodiments. In addition, for implementation of each operation in FIG. 5, refer to the corresponding descriptions in the method embodiments shown in FIG. 3 and FIG. 4.

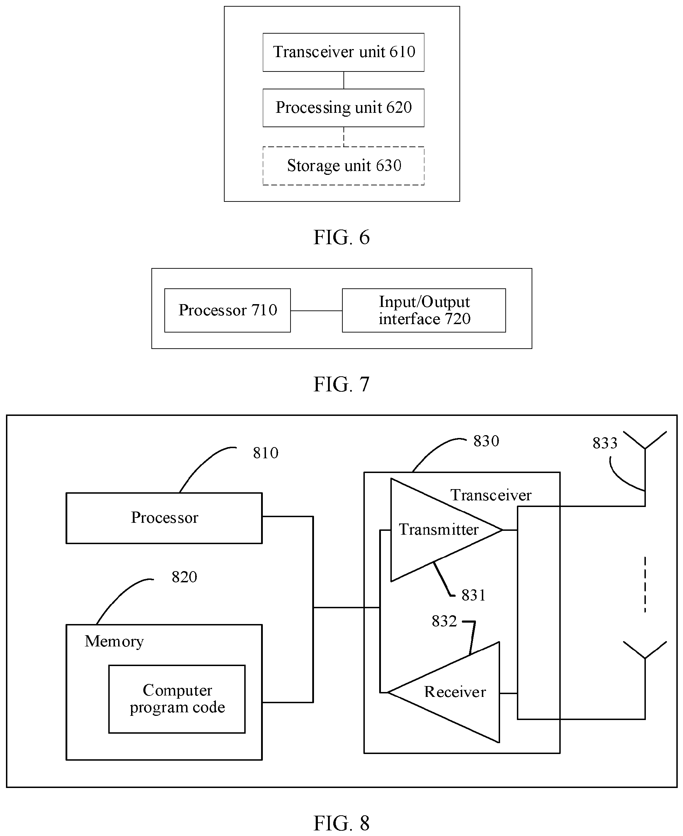

FIG. 6 is a block diagram of a communication apparatus 600 according to an embodiment of this application. The communication apparatus 600 may be the radio frequency unit or the distributed unit in the foregoing embodiments, or may be a chip or a module in the radio frequency unit or the distributed unit, and is configured to implement the methods in the foregoing embodiments. The communication apparatus 600 includes a transceiver unit 610 and a processing unit 620. The following describes the transceiver unit 610 and the processing unit 620 by using examples.

The transceiver unit 610 may include a sending unit and a receiving unit that are respectively configured to implement a sending function or a receiving function in the foregoing method embodiments. The transceiver unit 610 may further include the processing unit, configured to implement a function other than sending or receiving.

When the communication apparatus 600 is a radio frequency unit, for example, the processing unit 620 is configured to determine a resource feature 1 of first service data; and the transceiver unit 610 is configured to send the first service data to a processing module 1 based on the resource feature 1.

Optionally, the communication apparatus 600 further includes a storage unit 630. The storage unit 630 is configured to store a program or code for performing the foregoing methods.

The foregoing content is merely used as an example for description. When the communication apparatus 600 is a radio frequency unit, the communication apparatus 600 is responsible for performing methods or steps related to the radio frequency unit in the foregoing method embodiments.

When the communication apparatus 600 is a distributed unit, for example, the transceiver unit 810 is configured to receive first service data from a radio frequency unit.

Optionally, the communication apparatus 600 further includes a storage unit 630. The storage unit 630 is configured to store a program or code for performing the foregoing methods.

The foregoing content is merely used as an example for description. When the communication apparatus 600 is a distributed unit, the communication apparatus 600 is responsible for performing the methods or steps related to the distributed unit in the foregoing method embodiments.

In addition, for implementation of each operation in FIG. 6, refer to the corresponding descriptions of the methods shown in the foregoing embodiments. Details are not described herein again.

The apparatus embodiments shown in FIG. 5 and FIG. 6 are for implementing the content described in the foregoing method embodiments shown in FIG. 3 and FIG. 4. Therefore, for specific execution steps and methods of the apparatuses shown in FIG. 5 and FIG. 6, refer to the content described in the foregoing method embodiments.

It should be understood that the transceiver unit may include a sending unit and a receiving unit. The sending unit is configured to perform a sending action of the communication apparatus, and the receiving unit is configured to perform a receiving action of the communication apparatus. For ease of description, in embodiments of this application, the sending unit and the receiving unit are combined into one transceiver unit. Unified descriptions are provided herein, and details are not described below.

It may be understood that the transceiver unit 610 and the processing unit 620 may be internal compositions of the radio frequency unit or the distributed unit. This is not limited herein.

FIG. 7 is a diagram of a communication apparatus 700 according to an embodiment of this application. The communication apparatus 700 may be configured to implement a function of the radio frequency unit or the distributed unit in the foregoing methods. The communication apparatus 700 may be a chip in the radio frequency unit or the distributed unit.

The communication apparatus 700 includes an input/output interface 720 and a processor 710. The input/output interface 720 may be an input/output circuit. The processor 710 may be a signal processor, a chip, or another integrated circuit that can implement the methods in this application. The input/output interface 720 is configured to input or output a signal or data.

For example, when the communication apparatus 700 is a radio frequency unit, the input/output interface 720 is configured to send first service data to a processing module 1 based on a resource feature 1; and the processor 710 is configured to determine the resource feature 1 of the first service data. The processor 710 is configured to perform a part or all of steps in any one of the methods provided in this application.

For example, when the communication apparatus 700 is a distributed unit, the input/output interface 720 is configured to receive first service data from a radio frequency unit; and the processor 710 is configured to process the first service data. The processor 710 is configured to perform a part or all of steps in any one of the methods provided in this application.

In a possible implementation, the processor 710 executes instructions stored in a memory, to implement a function implemented by a network device or a terminal device.

Optionally, the communication apparatus 700 further includes the memory.

Optionally, the processor and the memory are integrated together.

Optionally, the memory is outside the communication apparatus 700.

In a possible implementation, the processor 710 may be a logic circuit, and the processor 710 inputs/outputs a message or signaling through the input/output interface 720. The logic circuit may be a signal processor, a chip, or another integrated circuit that can implement the methods in embodiments of this application.

The foregoing descriptions of the apparatus in FIG. 7 are merely an example for description. The apparatus can be configured to perform the methods in the foregoing embodiments. For specific content, refer to the descriptions in the foregoing method embodiments. Details are not described herein again.

FIG. 8 is a block diagram of a communication apparatus 800 according to an embodiment of this application. The communication apparatus 800 may be a network device or a chip. The communication apparatus 800 may be configured to perform operations performed by the network device in the method embodiments shown in FIG. 3 and FIG. 4.

When the communication apparatus 800 is a network device, for example, a base station, FIG. 8 is a diagram of a simplified structure of the base station. The base station includes a part 810, a part 820, and a part 830. The part 810 is mainly configured to perform baseband processing, control the base station, and the like. The part 810 is usually a control center of the base station, may be usually referred to as a processor, and is configured to control the base station to perform a processing operation on a network device side in the foregoing method embodiments. The part 820 is mainly configured to store computer program code and data. The part 830 is mainly configured to receive and send a radio frequency signal, and perform conversion between the radio frequency signal and a baseband signal. The part 830 may be usually referred to as a transceiver module, a transceiver machine, a transceiver circuit, a transceiver, or the like. The transceiver module in the part 830 may also be referred to as a transceiver machine, a transceiver, or the like, and includes an antenna 833 and a radio frequency circuit (not shown in FIG. 8). The radio frequency circuit is mainly configured to perform radio frequency processing. Optionally, in the part 830, a component configured to implement a receiving function may be considered as a receiver, and a component configured to implement a sending function may be considered as a transmitter. In other words, the part 830 includes a receiver 832 and a transmitter 831. The receiver may also be referred to as a receiving module, a receiver device, a receiving circuit, or the like, and the transmitter may be referred to as a transmitting module, a transmitter device, a transmitting circuit, or the like.

The part 810 and the part 820 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, the plurality of boards may share one or more processors, the plurality of boards share one or more memories, or the plurality of boards share one or more processors at the same time.

For example, in an implementation, the transceiver module in the part 830 is configured to perform a receiving/sending-related process performed by the network device in embodiments shown in FIG. 3 and FIG. 4. The processor in the part 810 is configured to perform a processing-related process performed by the network device in embodiments shown in FIG. 3 and FIG. 4.

It should be understood that FIG. 8 is merely an example rather than a limitation. The network device including the processor, the memory, and the transceiver may not depend on the structures shown in FIG. 5 to FIG. 7.

When the communication apparatus 800 is a chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as an output of the chip, and a receiving operation performed by the network device in the foregoing method embodiments may be understood as an input of the chip.

This application further provides a chip, including a processor. The processor is configured to invoke, from a memory, instructions stored in the memory and run the instructions, to enable a communication device on which the chip is mounted to perform the methods in the foregoing examples.

This application further provides another chip, including an input interface, an output interface, and a processor. The input interface, the output interface, and the processor are connected to each other through an internal connection path. The processor is configured to execute code in a memory, and when the code is executed, the processor is configured to perform the methods in the foregoing examples. Optionally, the chip further includes the memory, and the memory is configured to store a computer program or code.

This application further provides a processor, configured to be coupled to a memory, and configured to perform the method and the function that are related to the network device or the terminal device in any one of the foregoing embodiments.

Another embodiment of this application provides a computer program product including instructions. When the computer program product runs on a computer, the methods in the foregoing embodiments are implemented.

This application further provides a computer program. When the computer program is run on a computer, the methods in the foregoing embodiments are implemented.

Another embodiment of this application provides a computer-readable storage medium. The computer-readable storage medium stores a computer program. When the computer program is executed by a computer, the methods in the foregoing embodiments are implemented.

In descriptions in embodiments of this application, unless otherwise specified, "a plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, the terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the term such as "example" or "for example" is used to represent giving an example, an illustration, or a description.

Any embodiment or design solution described by using "example" or "for example" in embodiments of this application should not be explained as being more preferred or having more advantages than another embodiment or design solution. Specifically, the term "example" or "for example" is used to present a related concept in a specific manner for ease of understanding.

In descriptions of embodiments of this application, unless otherwise specified, "/" represents an "or" relationship between associated objects. For example, A/B may represent A or B. In this application, "and/or" describes only an association relationship between associated objects, and represents that three relationships may exist. For example, A and/or B may represent the following three cases: Only A exists, both A and B exist, and only B exists, where A and B may be singular or plural.

In various embodiments of this application, sequence numbers of the foregoing processes do not mean execution sequences. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and the electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed.

In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When functions are implemented in a form of a software functional unit and sold or used as an independent product, the functions may be stored in a computer-readable storage medium. Based on such an understanding, the technical solutions in embodiments of this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations in embodiments of this application, but are not intended to limit the protection scope of embodiments of this application. Any variation or replacement readily figured out by a person skilled in the art within the technical scope disclosed in embodiments of this application shall fall within the protection scope in embodiments of this application. Therefore, the protection scope of embodiments of this application should be subject to the protection scope of the claims.

## Claims

1. A data processing method, wherein the method is applied to a radio frequency unit side of a network device, and the method comprises:
determining a first resource feature of first service data; and
sending the first service data to a first processing module based on the first resource feature, wherein
the first processing module is one of at least one processing module, and the at least one processing module is used in a distributed unit side of the network device.

2. The method according to claim 1, wherein the method further comprises:
receiving first indication information, wherein the first indication information indicates at least one mapping relationship, and each mapping relationship associates one resource feature with one processing module; and
determining the first processing module based on a first mapping relationship and the first resource feature, wherein
the at least one mapping relationship comprises the first mapping relationship, and the first mapping relationship associates the first resource feature with the first processing module.

3. The method according to claim 2, wherein the first indication information comprises an identifier of the at least one processing module and a resource feature associated with a processing module corresponding to each identifier.

4. The method according to any one of claims 1 to 3, wherein the first resource feature comprises at least one of the following:
time domain information, frequency domain information, or space domain information.

5. The method according to any one of claims 1 to 4, wherein the method further comprises:
receiving second indication information, wherein the second indication information indicates a status of the first processing module; and
sending the first service data to a first module comprises:
sending the first service data to the first processing module when determining, based on the second indication information, that the first processing module is in an operating state.

6. A data processing method, comprising:
sending first indication information, wherein the first indication information indicates at least one mapping relationship, and each mapping relationship associates one resource feature with one processing module; and
the processing module is used in a distributed unit side of a network device.

7. The method according to claim 6, wherein the first indication information comprises an identifier of at least one processing module and a resource feature associated with a processing module corresponding to each identifier.

8. The method according to claim 6 or 7, wherein the resource feature comprises at least one of the following:
time domain information, frequency domain information, or space domain information.

9. The method according to any one of claims 6 to 8, wherein the method further comprises:
sending second indication information, wherein the second indication information indicates a status of a part or all of the at least one processing module.

10. A communication apparatus, comprising:
a radio frequency unit, configured to determine a first resource feature of first service data, wherein
the radio frequency unit is further configured to send the first service data to a first processing module based on the first resource feature; and
the first processing module is one of at least one processing module, and the at least one processing module is used in a distributed unit side of the communication apparatus.

11. The apparatus according to claim 10, wherein
the radio frequency unit is further configured to receive first indication information, wherein the first indication information indicates at least one mapping relationship, and each mapping relationship associates one resource feature with one processing module;
the radio frequency unit is further configured to determine the first processing module based on a first mapping relationship and the first resource feature; and
the at least one mapping relationship comprises the first mapping relationship, and the first mapping relationship associates the first resource feature with the first processing module.

12. The apparatus according to claim 11, wherein the first indication information comprises an identifier of the at least one processing module and a resource feature associated with a processing module corresponding to each identifier.

13. The apparatus according to any one of claims 10 to 12, wherein the first resource feature comprises at least one of the following:
time domain information, frequency domain information, or space domain information.

14. The apparatus according to any one of claims 10 to 13, wherein
the radio frequency unit is further configured to receive second indication information, wherein the second indication information indicates a status of the first processing module; and
the radio frequency unit is further configured to send the first service data to the first processing module when determining, based on the second indication information, that the first processing module is in an operating state.

15. A communication apparatus, comprising:
a distributed unit, configured to send first indication information, wherein the first indication information indicates at least one mapping relationship, and each mapping relationship associates one resource feature with one processing module.

16. The apparatus according to claim 15, wherein the first indication information comprises an identifier of at least one processing module and a resource feature associated with a processing module corresponding to each identifier.

17. The apparatus according to claim 15 or 16, wherein the resource feature comprises at least one of the following:
time domain information, frequency domain information, or space domain information.

18. The apparatus according to any one of claims 15 to 17, wherein the distributed unit is further configured to send second indication information, wherein the second indication information indicates a status of a part or all of the at least one processing module.

19. A communication apparatus, comprising a processor, wherein the processor is configured to enable, by executing a computer program or instructions or by using a logic circuit,
the communication apparatus to perform the method according to any one of claims 1 to 5, or
the communication apparatus to perform the method according to any one of claims 6 to 9.

20. The communication apparatus according to claim 19, wherein the communication apparatus further comprises a memory, and the memory is configured to store the computer program or the instructions.

21. The communication apparatus according to claim 19 or 20, wherein the communication apparatus further comprises a communication interface, and the communication interface is configured to input and/or output a signal.

22. A communication apparatus, comprising a logic circuit and an input/output interface, wherein the input/output interface is configured to input and/or output a signal, and
the logic circuit is configured to perform the method according to any one of claims 1 to 5, or
the logic circuit is configured to perform the method according to any one of claims 6 to 9.

23. A computer-readable storage medium, wherein the computer-readable storage medium stores a computer program or instructions, and when the computer program or the instructions are run on a computer,
the method according to any one of claims 1 to 5 is performed, or
the method according to any one of claims 6 to 9 is performed.

24. A computer program product, comprising instructions, wherein when the instructions are run on a computer,
the method according to any one of claims 1 to 5 is performed, or
the method according to any one of claims 6 to 9 is performed.

25. A communication system, comprising a radio frequency unit and a distributed unit, wherein
the radio frequency unit is configured to perform the method according to any one of claims 1 to 5, and
the distributed unit is configured to perform the method according to any one of claims 6 to 9.
